# EUROPEAN PATENT APPLICATION

(11) **EP 4 815 117 A1**
(43) Date of publication of application: **30.09.2026**
(21) Application number: 26156549.3
(22) Date of filing: 05.02.2026
(51) Int. Cl.: H01M 10/6551, H01M 10/613, H01M 10/625, H01M 10/651, H01M 50/103, H01M 50/209, H01M 50/249, H01M 50/342

(54) **POWER STORAGE DEVICE**

(30) Priority: 26.03.2025 JP 2025052550
(71) Applicant: Toyota Jidosha Kabushiki Kaisha, Toyota-shi, Aichi-ken 471-8571 (JP)
(72) Inventor: MATSUI, Takaaki, Toyota-shi, Aichi-ken, 471-8571 (JP); KATSUMOTO, Taichi, Toyota-shi, Aichi-ken, 471-8571 (JP); KOKUBO, Akinori, Toyota-shi, Aichi-ken, 471-8571 (JP)
(74) Representative: TBK

(57) **Abstract**

A power storage device comprises: at least one battery cell equipped with a cell case; a discharge valve that is provided at a first bottom section, which is a bottom section of the battery cell, and that performs valve-opening when an internal pressure of the cell case has attained a specific value; a battery case that houses the battery cell; an uneven surface portion that is formed at at least one of the first bottom section or a second bottom section, which is a bottom section of the battery case, and that is disposed at a different position from the discharge valve when viewed in a vertical direction; and a deformable thermal conduction material that is adhered to the first bottom section and the second bottom section so as to contact the uneven surface portion while avoiding the discharge valve.

## Description

### BACKGROUND

### Technical Field

The present disclosure relates to a power storage device.

### Related Art

Japanese Patent Application Laid-Open (JP-A) No. 2024-114439 discloses a power storage device including a battery module equipped with plural battery cells stacked in a specific direction, and a battery case housing the battery module.

A discharge valve that performs valve-opening when an internal pressure of a cell case configuring the exterior of each of the battery cells has attained a specific value is provided to a bottom section of the cell case. The bottom section of the battery case and the bottom section of each battery cell are fixed together with a thermal conduction material, which is an adhesive having good thermal conduction properties, interposed therebetween. The configuration of the invention of the JP-A No. 2024-114439 enables each battery cell to be cooled efficiently by heat from each battery cell being transferred to the battery case through the thermal conduction material.

A cell case bulges when the internal pressure of the cell case has risen. Sometimes the bottom section of the cell case deforms toward the internal space side of the cell case when this occurs. Sometimes the thermal conduction material is not able to comply to the deformation of at least one out of the bottom section of the cell case or the bottom section of the battery case in such circumstances. The thermal conduction material sometimes detaches from at least one out of the bottom section of the cell cases or the bottom section of the battery case in such circumstances. This sometimes leads to the thermal conduction material not being able to cool the battery cells with good efficiency when such a phenomenon occurs.

Moreover, were the thermal conduction material to contact the bottom section of the cell case then there would be a concern that the discharge valve might no longer be able to perform valve-opening when the internal pressure of the cell case has attained the specific value.

In consideration of the above circumstances, an object of the present disclosure is to obtain a power storage device capable of suppressing a drop in battery cell cooling function provided by a thermal conduction material interposed between a first bottom section of a battery cell and a second bottom section of a battery case, even in cases in which the bottom section of the cell case has deformed toward an internal space side of the cell case, while still being a structure in which a discharge valve of the battery cell performs valve-opening smoothly when an internal pressure of the cell case of the battery cell has attained a specific value.

### SUMMARY

A power storage device of a first aspect includes at least one battery cell equipped with a cell case, a discharge valve that is provided at a first bottom section which is a bottom section of the battery cell and that performs valve-opening when an internal pressure of the cell case has attained a specific value, a battery case that houses the battery cell, an uneven surface portion that is formed at at least one of the first bottom section or a second bottom section which is a bottom section of the battery case and that is disposed at a different position from the discharge valve when viewed in a vertical direction, and a deformable thermal conduction material that is adhered to the first bottom section and the second bottom section so as to contact the uneven surface portion while avoiding the discharge valve.

In the power storage device of the first aspect, the uneven surface portion to be contacted by the thermal conduction material is formed to at least one out of the first bottom section of the cell case of the battery cell or the second bottom section of the battery case. The adhesive strength between the member formed with the uneven surface portion and the thermal conduction material is raised thereby. This means that the thermal conduction material is not liable to detach from the member formed with the uneven surface portion even if the bottom section of the cell case deforms toward the internal space side of the cell case when the cell case has been bulged by the internal pressure thereof. The battery cell can accordingly be cooled with good efficiency utilizing the thermal conduction material provided between the first bottom section of the battery cell and the second bottom section of the battery case, even in cases in which the bottom section of the cell case has deformed toward the internal space side of the cell case.

In the power storage device of the first aspect, the position of the uneven surface portion is different to that of the discharge valve when viewed along the vertical direction. This means that the discharge valve of the battery cell performs valve-opening smoothly when the internal pressure of the cell case of the battery cell has attained a specific value.

The power storage device of a second aspect is the first aspect, wherein the uneven surface portion is configured by plural ribs.

In the power storage device of the second aspect, the adhesive strength between at least one out of the first bottom section of the cell case or the second bottom section of the battery case and the thermal conduction material, and the mechanical strength of at least one out of the first bottom section of the cell case and the second bottom section of the battery case, are raised by the ribs.

The power storage device of a third aspect is the second aspect, wherein the ribs are provided at the first bottom section.

In the power storage device of the third aspect the adhesive strength between the first bottom section of the cell case and the thermal conduction material, and the mechanical strength of the cell case, are raised by the ribs.

A power storage device of a fourth aspect is the third aspect, wherein a shape of the first bottom section when the cell case is viewed in the vertical direction is a rectangular shape including a pair of long sides and a pair of short sides, and the ribs extend along a direction parallel to the long sides.

In the power storage device of the fourth aspect, the adhesive strength between the first bottom section of the cell case and the thermal conduction material is raised by the ribs.

A power storage device of a fifth aspect is the power storage device of the third aspect, wherein a shape of the first bottom section when the cell case is viewed in the vertical direction is a rectangular shape including a pair of long sides and a pair of short sides, and the ribs extend along a direction parallel to the short sides.

In the power storage device of the fifth aspect, the bottom section of the cell case is better suppressed by the ribs from deforming toward the internal space side of the cell case when the cell case has been bulged by the internal pressure thereof. This means that the thermal conduction material is less liable to detach from the first bottom section of the cell case than cases in which the bottom section of the cell case has deformed greatly toward the internal space side of the cell case.

A power storage device of a sixth aspect is the second aspect, wherein the ribs are provided at the second bottom section of the battery case.

In the power storage device of the sixth aspect, the adhesive strength between the second bottom section of the battery case and the thermal conduction material, and the mechanical strength of the battery case, are raised by the ribs.

A power storage device of a seventh aspect is the sixth aspect, wherein a shape of the first bottom section when the cell case is viewed in the vertical direction is a rectangular shape including a pair of long sides and a pair of short sides, and the ribs extend along a direction parallel to the long sides.

In the power storage device of the seventh aspect, the ribs are not liable to impede the second bottom section from deforming so as to comply to the thermal conduction material when the bottom section of the cell case deforms toward the internal space side of the cell case and the thermal conduction material has deformed so as to comply to this deformation. This means that the thermal conduction material is less liable to detach from the second bottom section of the battery case than cases in which deformation of the second bottom section of the battery case is liable to be impeded.

The power storage device of the eighth aspect is any one of the first aspect to the seventh aspect, wherein the uneven surface portion is a rough surface.

In the power storage device of the eight aspect, the adhesive strength between at least one out of the first bottom section of the cell case or the second bottom section of the battery case, and the thermal conduction material, is raised by the rough surface.

As described above, the power storage device according to the present disclosure exhibits the excellent advantageous effect of being able to suppress a drop in battery cell cooling function provided by a thermal conduction material interposed between a first bottom section of a battery cell and a second bottom section of a battery case, even in cases in which the bottom section of the cell case has deformed toward an internal space side of the cell case, while still being a structure in which a discharge valve of the battery cell performs valve-opening smoothly when an internal pressure of the cell case of the battery cell has attained a specific value.

### BRIEF DESCRIPTION OF THE DRAWINGS

Exemplary embodiments of the present disclosure will be described in detail based on the following figures, wherein:
Fig. 1 is a cross-section sectioned along a vehicle width direction center of a vehicle installed with a battery pack according to a first exemplary embodiment;
Fig. 2 is a schematic exploded perspective view of a battery pack;
Fig. 3 is a schematic exploded perspective view of a lower case of a battery case and a battery module;
Fig. 4 is a schematic front view of a battery cell and a thermal conduction material;
Fig. 5 is a schematic cross-section sectioned along line 5-5 of Fig. 4;
Fig. 6 is a schematic bottom view of a battery cell;
Fig. 7 is a schematic cross-section sectioned along line 5-5 of Fig. 4 when a battery cell has bulged;
Fig. 8 is a schematic cross-section sectioned along line 8-8 of Fig. 4 when a battery cell has bulged;
Fig. 9 is a schematic bottom view similar to Fig. 6 of a battery cell of a battery pack according to a second exemplary embodiment;
Fig. 10 is a schematic cross-section similar to Fig. 7 when a battery cell has bulged;
Fig. 11 is a schematic cross-section similar to Fig. 8 when a battery cell has bulged;
Fig. 12 is an exploded perspective view similar to Fig. 3 of a lower case of a battery case and a battery module according to a third exemplary embodiment;
Fig. 13 is a schematic bottom view of a battery cell;
Fig. 14 is a schematic cross-section similar to Fig. 7 when a battery cell has bulged;
Fig. 15 is a schematic cross-section similar to Fig. 8 when a battery cell has bulged;
Fig. 16 is a schematic bottom view similar to Fig. 6 of a battery cell of a battery pack according to a fourth exemplary embodiment; and
Fig. 17 is an exploded perspective view similar to Fig. 3 of a lower case of a battery case and a battery module according to a fifth exemplary embodiment.

### DETAILED DESCRIPTION

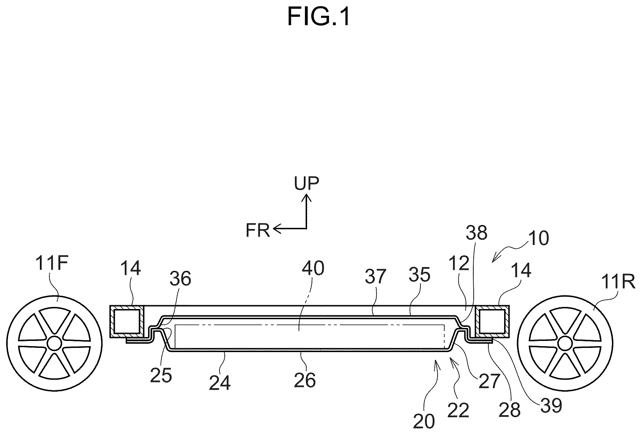

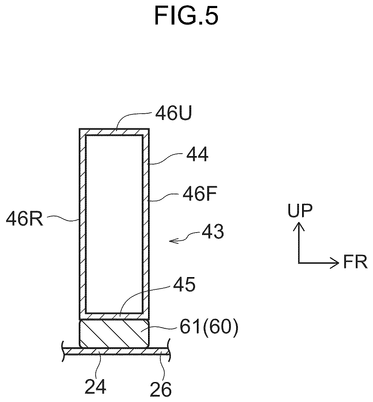

Description follows regarding a battery pack (power storage device) according to a first exemplary embodiment, with reference to Fig. 1 to Fig. 8. Note that arrow UP, arrow FR, and arrow LH in the drawings respectively indicate upward in a vehicle vertical direction, forwards in a vehicle front-rear direction, and leftwards in a vehicle left-right direction.

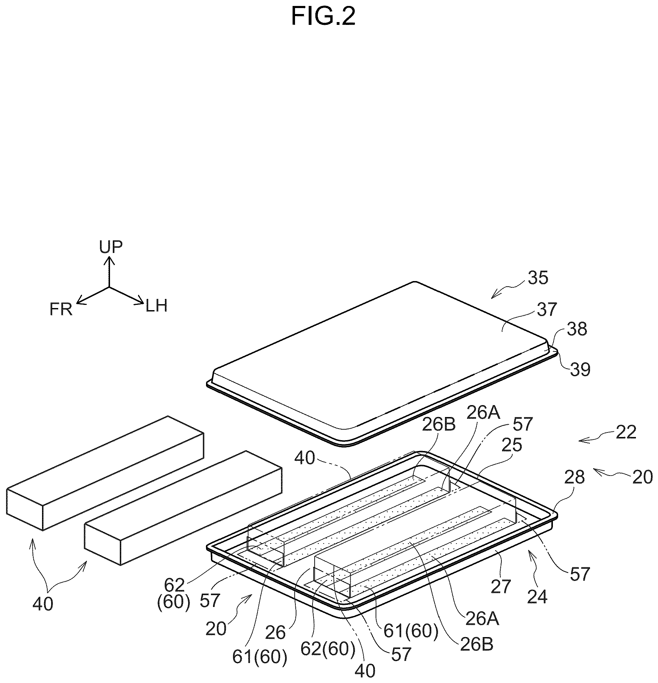

A battery pack 20 of the present exemplary embodiment is installed to a vehicle (electric vehicle) 10, as illustrated in Fig. 1 and Fig. 2. The vehicle 10 of the present exemplary embodiment is a battery electric vehicle (BEV).

The vehicle 10 includes a left-right pair of front wheels 11F, a left-right pair of rear wheels 11R, a left-right pair of rockers 12 that are part of a vehicle body framework member and extend in the vehicle front-rear direction, and a front-rear pair of cross members 14 that configure part of the vehicle body framework member and extend in a vehicle width direction (left-right direction) with both end portions thereof respectively fixed to the left and right rockers 12.

The battery pack 20 of the present exemplary embodiment includes a battery case 22, and two battery modules 40. Electrical power of the battery pack 20 (battery cells 43) is, for example, supplied to an electric motor (omitted in the drawings) that imparts drive force to the front wheels 11F and the rear wheels 11R.

As illustrated in Fig. 1 and Fig. 2, the battery case 22 includes a lower case 24 and an upper case 35.

The lower case 24 is a hollow body formed with an opening 25 in an upper face thereof. The lower case 24 includes a bottom plate (second bottom section) 26, a peripheral wall 27, and an outer peripheral flange 28. A plan view profile of the peripheral wall 27 is a ring shape, with a lower end portion of the peripheral wall 27 connected to an outer peripheral edge portion of the bottom plate 26. The plan view profile of the outer peripheral flange 28 is a ring shape, with an internal peripheral edge of the outer peripheral flange 28 connected to an upper end portion of the peripheral wall 27. The lower case 24 is, for example, made from metal.

The upper case 35 is a hollow body formed with an opening 36 in a lower face thereof. The upper case 35 includes a top plate 37, a peripheral wall 38, and an outer peripheral flange 39. The plan view profile of the peripheral wall 38 is a ring shape, with an upper end portion of the peripheral wall 38 connected to an outer peripheral edge portion of the top plate 37. The plan view profile of the outer peripheral flange 39 is a ring shape, with an internal peripheral edge portion of the outer peripheral flange 39 connected to a lower end portion of the peripheral wall 38.

As illustrated in Fig. 2, there are two of the battery modules 40 provided inside the lower case 24. The battery modules 40 are arranged alongside each other in the left-right direction.

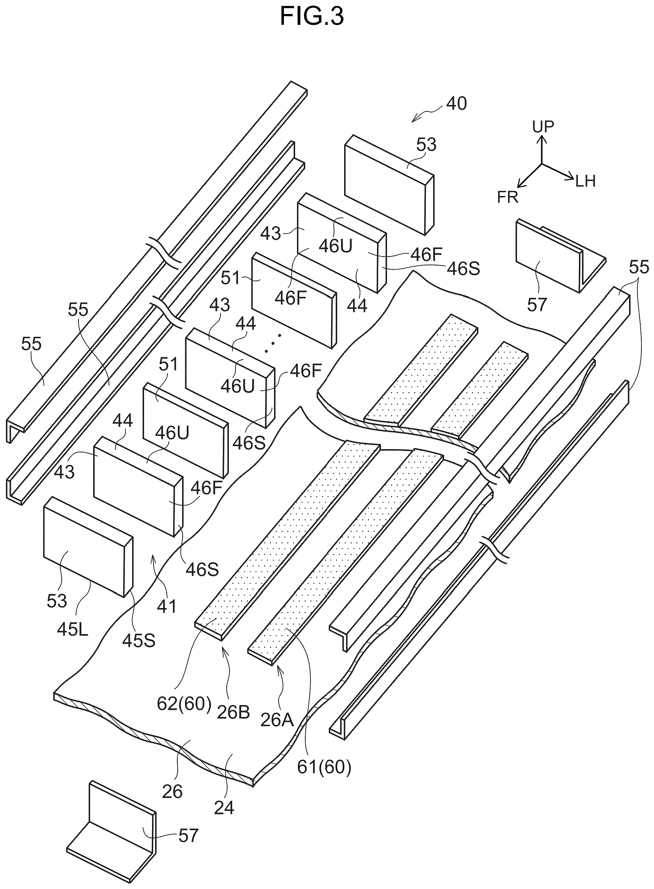

As illustrated in Fig. 3, each of the battery modules 40 is equipped with a battery stack 41, a pair of end plates 53, and four restraining members 55.

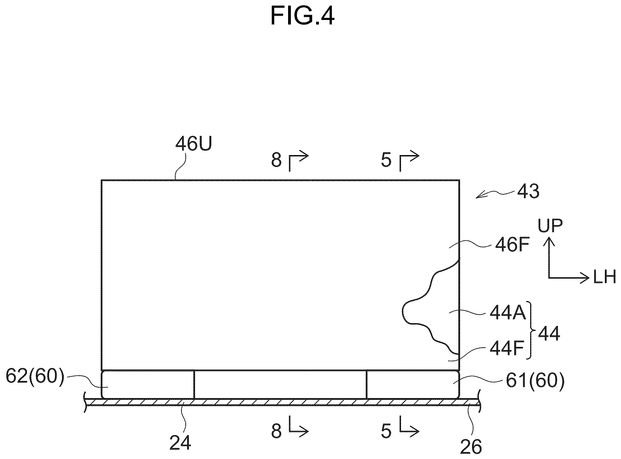

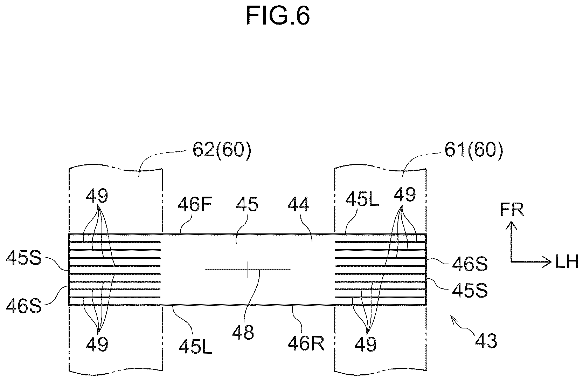

As illustrated in Fig. 3, the battery stack 41 extends along the front-rear direction in plan view, and is equipped with plural battery cells 43, and with plural electrical insulation members 51 positioned between adjacent of the battery cells 43. Note that for convenience only three of the battery cells 43 are depicted in Fig. 3, however in reality the battery stack 41 includes more than three of the battery cells 43. As illustrated in Fig. 4, a cell case 44 configuring the exterior of the battery cells 43, which are lithium-ion batteries, is equipped with a metal case body 44A and a cladding film 44F covering the surface of the case body 44A. The case body 44A has a rectangular parallelepiped shape. The cladding film 44F is in close contact with a discharge valve 48 and ribs 49, described later, and is in close contact with the surface of the case body 44A. The cladding film 44F is made from polypropylene. The bottom section of the case body 44A is configured by a bottom plate (first bottom section) 45, and the upper face of the case body 44A is configured by an upper plate 46U. The plan view profile of the bottom plate 45 and the upper plate 46U is a rectangular shape having a longer left-right direction than the front-rear direction thereof. Namely, as illustrated in Fig. 6, the exterior of the bottom plate 45 is configured by a pair of short sides 45S and a pair of long sides 45L. The short sides 45S are parallel to the front-rear direction, and the long sides 45L are parallel to the left-right direction. Face-on profiles of a front plate 46F and a rear plate 46R of the case body 44A are the same as each other. The face-on profiles of the front plate 46F and the rear plate 46R are each a rectangular shape longer in the left-right direction than the vertical direction. A positive electrode and a negative electrode (both omitted in the drawings) are provided to left and right side plates 46S of the case body 44A.

As illustrated in Fig. 6, the discharge valve 48 is provided to a left-right direction central portion of the bottom plate 45 of the case body 44A. The discharge valve 48 is a thinned portion having a + (plus) shape. Namely, the mechanical strength of the discharge valve 48 is lower than locations on the bottom plate 45 other than on the discharge valve 48. For example, the discharge valve 48 ruptures when the internal pressure of the cell case 44 attains a specific value due to the occurrence of an internal short in the battery cell 43. Namely, the discharge valve 48 performs valve-opening.

As illustrated in Fig. 6, plural ribs (uneven surface portion) 49 are provided so as to protrude downward from left and right side portions of the bottom plate 45 of the case body 44A. Each of the ribs 49 is parallel to the long sides 45L of the bottom plate 45 in plan view. As is apparent from Fig. 6, the left and right ribs 49 are provided to the bottom plate 45 so as to avoid the discharge valve 48.

As illustrated in Fig. 3, the battery module 40 is equipped with a front-rear pair of end plates 53. The front-side end plate 53 is positioned directly in front of the furthest forward battery cell 43, and the rear-side end plate 53 is positioned directly rearward of the furthest rearward battery cell 43.

As illustrated in Fig. 3, the four restraining members 55 extend in the front-rear direction, and have a substantially L-shaped profile in cross-section. Each of the restraining members 55 is fixed to the front and rear end plates 53 while covering the four corner portions of the battery cells 43 (the cell case 44) and of the front and rear end plates 53. The front-rear length of each of the restraining members 55 is configured so as to be shorter when fixed than when in a free-state. Namely, the front and rear end plates 53 are pulled in a direction so as to approach each other by the restraining members 55, and the front and rear end plates 53 thereby clamp the battery stack 41 from the front and rear. The battery stack 41 and the end plates 53 are integrated together by the left and right restraining members 55 in this manner. This thereby completes the battery module 40 equipped with the battery stack 41, the pair of end plates 53, and the four restraining members 55.

The battery modules 40 are further equipped with multiple bus bars (omitted in the drawings) for connecting to the positive electrodes and the negative electrodes of the respective battery cells 43, and a cooler (omitted in the drawings).

As illustrated in Fig. 2 and Fig. 3, each of the battery modules 40 is housed inside the lower case 24, and each of the battery modules 40 is fixed to the bottom plate 26. Namely, a thermal conduction material 60, which is an adhesive, is coated in a liquid state onto two regions 26A, 26B of the upper face of the bottom plate 26 that extend in the front-rear direction and are separated from each other. The thermal conduction material 60 is, for example, an epoxy resin based adhesive, a silicone rubber based adhesive, a polyethylene based adhesive, or a fluororesin based adhesive. The left-right dimension of each of the regions 26A, 26B is substantially the same as the left-right dimension of each of the ribs 49 provided to the cell case 44, and the front-rear dimension of each of the regions 26A, 26B is substantially the same as the front-rear dimension of the battery modules 40. The thermal conduction material 60 is further coated onto the entire region of each of the regions 26A, 26B. Namely, the thermal conduction material 60 includes a first thermal conduction portion 61 coated onto the region 26A on the left side, and a second thermal conduction portion 62 coated onto the region 26B on the right side. The thermal conductivity of the thermal conduction material 60 is high. Namely, the thermal conductivity of the thermal conduction material 60 is higher than the thermal conductivity of the electrical insulation members 51.

As illustrated by the double-dash broken lines in Fig. 2, a bottom section on the left side of the battery module 40 is mounted to the region 26A, and a bottom section on the right side of the battery module 40 is mounted to the region 26B. As illustrated in Fig. 6, in each of the battery cells 43 the first thermal conduction portion 61 contacts the ribs 49 on the left side of the bottom plate 45 of the cell case 44 and a left side portion of the bottom plate 45, and in each of the battery cells 43 the second thermal conduction portion 62 contacts the ribs 49 on the right side of the bottom plate 45 of the cell case 44 and a right side portion of the bottom plate 45. In other words, the discharge valve 48 of the bottom plate 45 does not contact the first thermal conduction portion 61 or the second thermal conduction portion 62. When the thermal conduction material 60 has solidified, the battery modules 40 are fixed to the respective regions 26A, 26B by the first thermal conduction portion 61 and the second thermal conduction portion 62. The Young's modulus of the solidified thermal conduction material 60 is lower than the Young's modulus of the lower case 24 and the Young's modulus of the cell case 44, and the solidified thermal conduction material 60 is still able to deform.

Furthermore, as illustrated in Fig. 2, the end plates 53 of each of the battery modules 40 are fixed to the bottom plate 26 through brackets 57 made from metal with a L-shaped cross-section. Namely, each of the end plates 53 is fixed by a fixing means to a section on the corresponding bracket 57 parallel to the vertical direction, and a lower end section of each of the brackets 57 parallel to the horizontal direction is fixed by a fixing means to the bottom plate 26. Examples of the fixing means include bolts that pass through the bracket 57, and threaded holes formed in the end plates 53 and the bottom plate 26 to enable bolts to be screwed therein.

The outer peripheral flange 39 of the upper case 35 is mounted to the entire upper face of the outer peripheral flange 28 of the lower case 24 housing the two battery modules 40, with a sealing member (omitted in the drawings) interposed therebetween, and the outer peripheral flange 28 and the outer peripheral flange 39 are fixed together. This thereby completes the battery pack 20.

As illustrated in Fig. 1, the battery case 22 of the thus completed battery pack 20 is supported by the rockers 12 and the cross members 14. Namely, the outer peripheral flange 39 is fixed to the lower faces of the rockers 12 and the cross members 14 in a state in which the top plate 37 and the peripheral wall 38 of the upper case 35 are positioned in a space surrounded by the rockers 12 and the cross members 14.

### Operation and Advantageous Effects

Next, description follows regarding the operation and advantageous effects of the first exemplary embodiment.

For example, the battery cells 43 of the battery modules 40 supplying power to the electric motor sometimes makes the temperature of the battery cells 43 a high temperature. Part of the heat of the battery cells 43 is transferred from the left-right side portions of the bottom plate 45 of the cell case 44 (the cladding film 44F) through the first thermal conduction portion 61 and the second thermal conduction portion 62 to the bottom plate 26 of the lower case 24. The battery cells 43 are prevented from reaching an excessively high temperature by the first thermal conduction portion 61 and the second thermal conduction portion 62 dissipating the heat of the battery cells 43 to the bottom plate 26 in this manner. Namely, the battery cells 43 are cooled using the thermal conduction material 60.

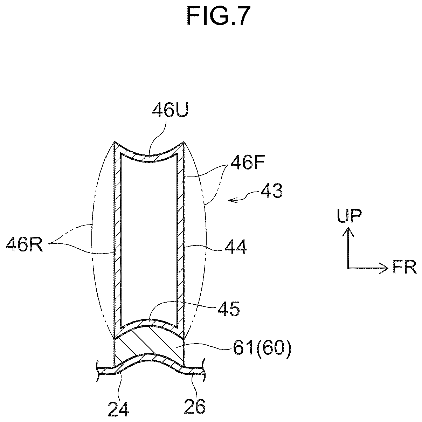

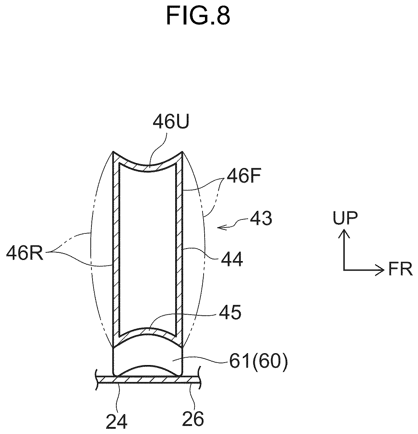

However, when an internal short occurs in one of the battery cells 43 in one of the battery modules 40, the internal pressure of the cell case 44 rises, and sometimes the front plate 46F and the rear plate 46R bulge toward the outside as illustrated by the double-dash broken lines in Fig. 7 and Fig. 8. When this occurs, the bottom plate 45 and the upper plate 46U sometimes deform so as to be indented toward the internal space side of the cell case 44 due to the bulging of the front plate 46F and the rear plate 46R. Namely, sometimes the bottom plate 45 deforms such that a location between the pair of long sides 45L of the bottom plate 45 is displaced upward. The ribs 49 are provided at the left side portion of the bottom plate 45 where the first thermal conduction portion 61 is fixed, and the ribs 49 are provided at the right side portion of the bottom plate 45 where the second thermal conduction portion 62 is fixed. This means that the adhesive strength between the first thermal conduction portion 61 and the left side portion of the bottom plate 45, and the adhesive strength between the second thermal conduction portion 62 and the right side portion of the bottom plate 45, is greater than cases in which the entire lower face of the bottom plate 45 is a flat face. This means that in such cases, as illustrated in Fig. 7, the first thermal conduction portion 61 that contacts the ribs 49 on the left side of the bottom plate 45 of the cell case 44 and contacts the left side portion of the bottom plate 45 in the battery cell 43 bends so as to become upwardly convex to comply to the deformation of the bottom plate 45. Furthermore, although omitted from illustration, the second thermal conduction portion 62 that contacts the ribs 49 on the right side of the bottom plate 45 of the cell case 44 and the right side portion of the bottom plate 45 in the battery cell 43 bends so as to become upwardly convex to comply to the deformation of the bottom plate 45. This means that the bottom plate 26 of the lower case 24 that is adhered to the first thermal conduction portion 61 and the second thermal conduction portion 62 also bends so as to become upwardly convex. Even though the bottom plate 45 of the cell case 44 of the battery cell 43 deforms toward the internal space side of the cell case 44 in this manner, the thermal conduction material 60 is not liable to detach from the left side portion and the right side portions of the bottom plate 45, nor from the bottom plate 26 of the lower case 24. This means that, even in cases in which the bottom plate 45 of the cell case 44 has deformed toward the internal space side of the cell case 44, the battery cell 43 cooling function by the thermal conduction material 60 provided between the bottom plate 45 of the battery cells 43 and the bottom plate 26 of the lower case 24 can be suppressed from dropping.

Moreover, the ribs 49 are provided to the bottom plate 45, and so the mechanical strength of the cell case 44 is higher than cases in which the entire lower face of the bottom plate 45 is a flat face. This means that the cell case 44 is not liable to rupture.

Furthermore, the position of the ribs 49 and the position of the discharge valve 48 are different from each other when the battery cell 43 is viewed along the vertical direction, and so the thermal conduction material 60 does not contact the locations of the bottom plate 45 where the discharge valve 48 is provided (see Fig. 4 and Fig. 6). This means that the discharge valve 48 performs valve-opening smoothly when the internal pressure of the cell case 44 of the battery cells 43 has reach the specific value, and matter (debris) housed inside the cell case 44 is discharged smoothly to outside of the battery cell 43 through the discharge valve 48 and a ruptured location of the cladding film 44F corresponding to the discharge valve 48. Note that such debris contains, for example, internal electrodes (current collection terminals), electrolyte solution, and gas.

The battery pack 20 of the present exemplary embodiment as described above is accordingly able to suppress a drop in the battery cell 43 cooling function provided by the thermal conduction material 60 even in cases in which the bottom plate 45 of the cell case 44 has deformed toward the internal space side of the cell case 44, while still being a structure in which the discharge valve 48 performs valve-opening smoothly when the internal pressure of the cell case 44 of the battery cell 43 has attained the specific value.

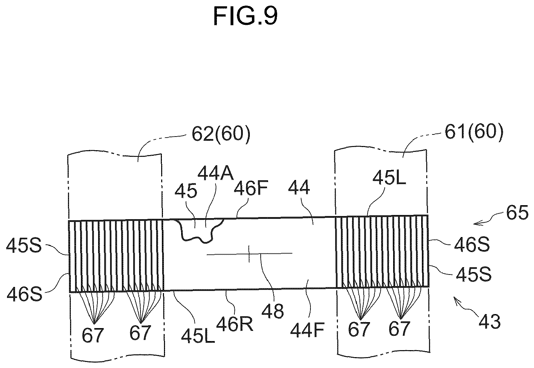

Description follows regarding a second exemplary embodiment of the present disclosure, with reference to Fig. 9 to Fig. 11. Note that the same reference numerals are appended to members the same as those of the first exemplary embodiment, and detailed explanation thereof will be omitted.

A battery pack 65 of the second exemplary embodiment differs from that of the first exemplary embodiment in the shape of ribs (uneven surface portion) 67 formed to the bottom plate 45 of the cell case 44 of the battery cells 43.

As illustrated in Fig. 9, the plural ribs 67 are provided projecting downward at the left and right sides of the bottom plate 45 of the cell case 44. Each of the ribs 67 is parallel to the short sides 45S of the bottom plate 45 in plan view. As is apparent from Fig. 9, the left and right ribs 67 are provided to the bottom plate 45 so as to avoid a discharge valve 48.

As illustrated by the double-dash broken lines in Fig. 9, in the second exemplary embodiment too, the first thermal conduction portion 61 contacts the ribs 67 on the left side of the bottom plate 45 of the cell case 44 of each of the battery cell 43 and contacts a left side portion of the bottom plate 45, and the second thermal conduction portion 62 contacts the ribs 67 on the right side of the bottom plate 45 of the battery cell 43 and a right side portion of the bottom plate 45. In other words, the discharge valve 48 of the bottom plate 45 does not contact the first thermal conduction portion 61 or the second thermal conduction portion 62. When the thermal conduction material 60 has solidified, the battery modules 40 are fixed to the regions 26A, 26B by the first thermal conduction portion 61 and the second thermal conduction portion 62. Furthermore, the battery modules 40 are also fixed to the regions 26A, 26B by plural brackets 57 (omitted in Fig. 9 to Fig. 11).

### Operation and Advantageous Effects

Next, description follows regarding the operation and advantageous effects of the second exemplary embodiment.

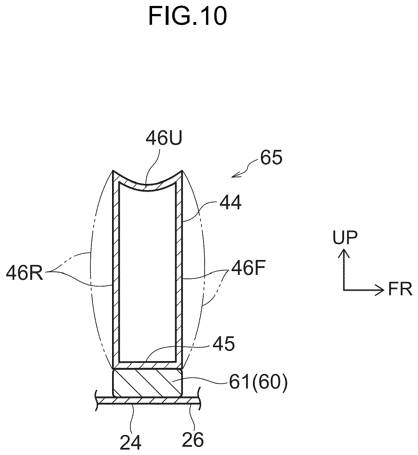

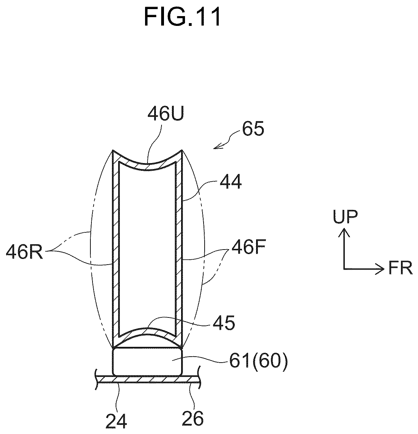

In the second exemplary embodiment too, when an internal short occurs in one of the battery cells 43 in one of the battery modules 40 then the internal pressure of the cell case 44 rises, and sometimes the front plate 46F and the rear plate 46R bulge toward the outside as illustrated by the double-dash broken lines in Fig. 10 and Fig. 11. When this occurs, the upper plate 46U sometimes deforms so as to be indented toward the internal space side of the cell case 44 due to the bulging of the front plate 46F and the rear plate 46R. Furthermore, sometimes the bottom plate 45 also becomes indented toward the internal space side of the cell case 44 due to such bulging. However, the ribs 67 that are provided to the left and right sides of the bottom plate 45 suppress the left and right sides of the bottom plate 45 from deforming so as to be indented toward the internal space side of the cell case 44. In other words, due to the ribs 67 being provided at the left and right sides of the bottom plate 45 so as to be parallel to the short sides 45S, the bending rigidity against upward deformation of the left and right sides of the bottom plate 45 is higher than in the first exemplary embodiment. This means that, as illustrated in Fig. 10, there is hardly any deformation of the left and right sides of the bottom plate 45 when this occurs. The thermal conduction material 60 fixed to the left and right side portions of the bottom plate 45 (the first thermal conduction portion 61 and the second thermal conduction portion 62), and locations of the bottom plate 26 of the lower case 24 positioned directly below the left and right sides of the bottom plate 45, accordingly hardly deform. This means that the thermal conduction material 60 is less liable to detach from the left side portion and the right side portions of the bottom plate 45, or from the bottom plate 26 of the lower case 24, than in cases in which the left and right side portions of the bottom plate 45 of the cell case 44 of the battery cell 43 deform upward greatly. This means that even if the front plate 46F and the rear plate 46R of the battery cell 43 bulge toward the outside, the battery cell 43 cooling function by the thermal conduction material 60 provided between the bottom plate 45 and the battery cells 43 and the bottom plate 26 of the lower case 24 can be suppressed from dropping.

Note that a left-right direction central portion of the bottom plate 45 where the ribs 67 are not formed deforms so as to bulge upward as illustrated in Fig. 11. Furthermore, in the second exemplary embodiment too, the discharge valve 48 performs valve-opening smoothly when the internal pressure of the cell case 44 of the battery cell 43 has attained the specific value, and matter (debris) housed inside the cell case 44 is discharged smoothly to outside of the battery cell 43 through the discharge valve 48.

This means that the battery pack 65 of the second exemplary embodiment is also able to utilize the thermal conduction material 60 to suppress the temperature of the battery cell 43 from reaching a high temperature even in cases in which the bottom plate 45 of the cell case 44 has deformed toward the internal space side of the cell case 44, while still being a structure in which the discharge valve 48 performs valve-opening smoothly when the internal pressure of the cell case 44 of the battery cell 43 has attained the specific value.

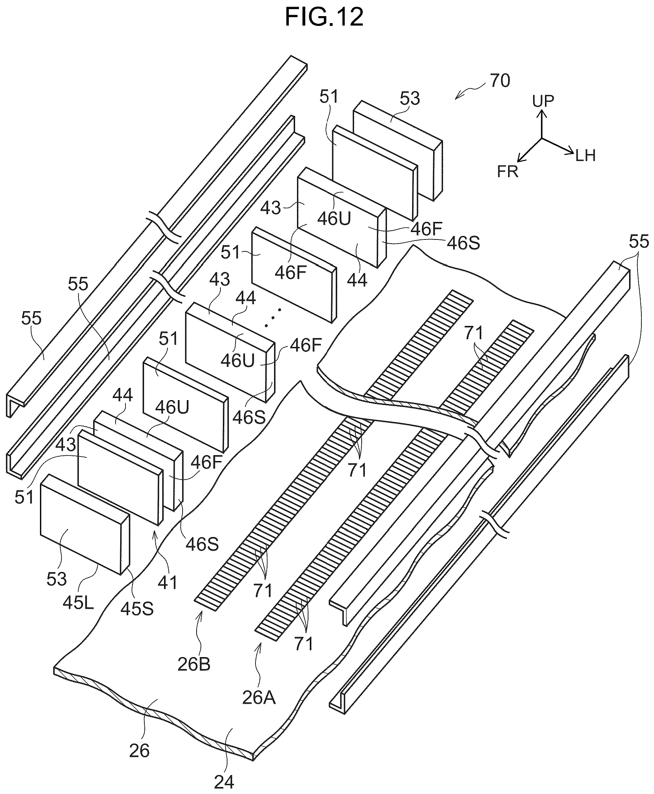

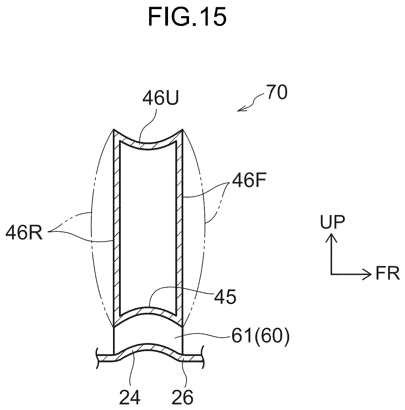

Next, description follows regarding a third exemplary embodiment of the present disclosure, with reference to Fig. 12 to Fig. 15. Note that the same reference numerals are appended to members the same as those of the first exemplary embodiment, and detailed explanation thereof will be omitted.

A battery pack 70 of the third exemplary embodiment differs from the first exemplary embodiment in that the ribs 49 are not provided to the bottom plate 45 of the battery cell 43, and instead ribs 71 are provided to the bottom plate 26 of the lower case 24.

As illustrated in Fig. 12, plural upward projecting ribs (uneven surface portions) 71 are provided respectively extending along the left-right direction in the regions 26A and the regions 26B of a bottom plate 26 of the lower case 24. Namely, the ribs 71 are parallel to the long sides 45L of the bottom plates 45. Furthermore, although omitted from illustration in Fig. 12, a first thermal conduction portion 61 is coated across the entirety of the region 26A, and a second thermal conduction portion 62 is coated across the entirety of the region 26B.

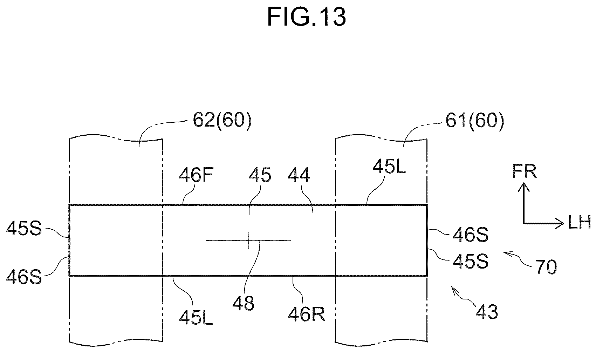

Ribs 49 are not formed to the bottom plate 45 of the cell case 44 of the battery cell 43 as illustrated in Fig. 13.

As illustrated by the double-dash broken lines in Fig. 13, in the third exemplary embodiment too, the first thermal conduction portion 61 contacts a left side portion of the bottom plate 45 of the cell case 44 of the battery cell 43, and the second thermal conduction portion 62 contacts a right side portion of the bottom plate 45 of the cell case 44 of the battery cell 43. In other words, the discharge valve 48 of each of the bottom plates 45 does not contact the first thermal conduction portion 61 or the second thermal conduction portion 62. When the thermal conduction material 60 is solidified, the battery modules 40 are fixed to each of the regions 26A, 26B by the first thermal conduction portion 61 and the second thermal conduction portion 62. Furthermore, the battery modules 40 are also fixed to the regions 26A, 26B by plural brackets 57 (omitted in Fig. 12 to Fig. 15).

### Operation and Advantageous Effects

Next, description follows regarding the operation and advantageous effects of the third exemplary embodiment.

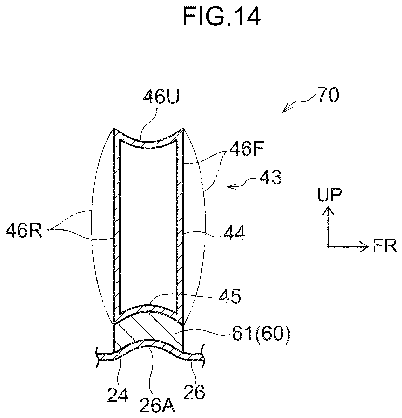

In the third exemplary embodiment too, the internal pressure of the cell case 44 rises when an internal short occurs in one of the battery cells 43 of one of the battery modules 40, and sometimes the bottom plate 45 and the upper plate 46U deform so as to be indented toward the internal space side of the cell case 44. This means that the first thermal conduction portion 61 that contacts the left side portion of the bottom plate 45 of the cell case 44 of the battery cells 43 as illustrated in Fig. 14 bends so as to become upwardly convex following the deformation of the bottom plate 45. Furthermore, although omitted from illustration, the second thermal conduction portion 62 that contacts the right side portion of the bottom plate 45 of the cell case 44 of the battery cells 43 bends so as to become upwardly convex following the deformation of the bottom plate 45. The ribs 71 are provided at the region 26A of the bottom plate 26 of the lower case 24 to which the first thermal conduction portion 61 is affixed, and the ribs 71 are provided to the region 26B of the bottom plate 26 of the lower case 24 where the second thermal conduction portion 62 is affixed. This means that the adhesive strength between the first thermal conduction portion 61 and the region 26A, and the adhesive strength between the second thermal conduction portion 62 and the region 26B, is greater than cases in which the entire lower face of the bottom plate 26 is a flat face. Due to the ribs 71 being parallel to the long sides 45L of the bottom plate 45 of the cell case 44 of the battery cell 43 in plan view, the ribs 71 are not liable to impede the regions 26A, 26B from deforming so as to comply to the bottom plate 45 when the regions 26A, 26B (the bottom plate 26) attempt to deform so as to comply to the bottom plates 45. As illustrated in Fig. 14, the region 26A of the bottom plate 26 adhered to the first thermal conduction portion 61 accordingly also bends so as to be upwardly convex. Moreover, although omitted from illustration, the region 26B of the bottom plate 26 adhered to the second thermal conduction portion 62 accordingly also bends so as to be upwardly convex. The thermal conduction material 60 is accordingly less liable to detach from the regions 26A, 26B than cases in which the regions 26A, 26B do not bend so as to be upwardly convex. The thermal conduction material 60 is accordingly less liable to detach from the regions 26A, 26B, or from the left side portion and right side portion of the bottom plate 45, even if the bottom plate 45 of the cell case 44 of the battery cell 43 deforms toward the internal space side of the cell case 44 in this manner. This means that even in cases in which the bottom plate 45 of the cell case 44 has deformed toward the internal space side of the cell case 44, the battery cell 43 cooling function by the thermal conduction material 60 provided between the bottom plate 45 of the battery cell 43 and the bottom plate 26 of the lower case 24 can be suppressed from dropping.

Furthermore, due to the ribs 71 being provided to the bottom plate 26, the mechanical strength of the bottom plate 26 is higher than cases in which the entire bottom plate 26 is a flat face. This means that the bottom plate 26 (the lower case 24) is not liable to rupture.

Furthermore, in the third exemplary embodiment too, the discharge valve 48 performs valve-opening smoothly when the internal pressure of the cell case 44 of the battery cell 43 has attained the specific value, and the matter (debris) housed inside the cell case 44 is discharged smoothly to outside of the battery cell 43 through the discharge valve 48.

The battery pack 70 of the third exemplary embodiment is accordingly able to suppress a drop in the battery cell 43 cooling function provided by the thermal conduction material 60 even in cases in which the bottom plate 45 of the cell case 44 has deformed toward the internal space side of the cell case 44, while still being a structure in which the discharge valve 48 performs valve-opening smoothly when the internal pressure of the cell case 44 of the battery cell 43 has attained the specific value.

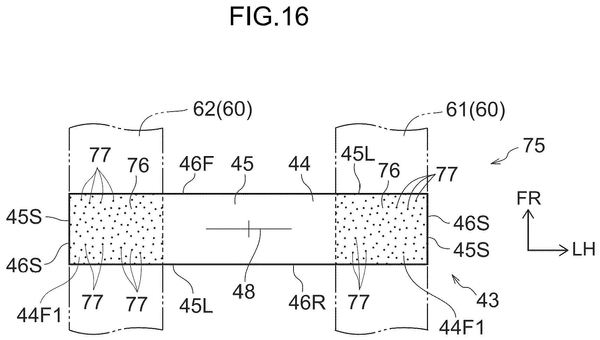

Next, description follows regarding a fourth exemplary embodiment of the present disclosure, with reference to Fig. 16. Note that the same reference numerals are appended to members the same as those of the first exemplary embodiment, and detailed explanation thereof will be omitted.

A battery pack 75 of the fourth exemplary embodiment differs from the first exemplary embodiment and the second exemplary embodiment in not being provided with ribs 49, 67 on the bottom plate 45 of the battery cells 43, and in there being a rough surface (uneven surface portion) 76 provided instead at locations covering the left and right side portions of the bottom plate 45, which is part of a cladding film 44F. Hereafter the locations on the cladding film 44F covering the left and right side portions of the bottom plate 45 will be called side portions 44F1.

As illustrated in Fig. 16, multiple indentations and protrusions 77 are formed to the left and right side portions 44F 1 of the cladding film 44F. The rough surfaces 76 are configured by the multiple indentations and protrusions 77. The left and right rough surfaces 76 are provided to the bottom plate 45 so as to avoid the discharge valve 48.

As illustrated by the double-dash broken lines in Fig. 16, in the fourth exemplary embodiment too, the first thermal conduction portion 61 contacts the left side rough surface 76 of the cell case 44 of the battery cells 43, and the second thermal conduction portion 62 contacts the right side rough surface 76 of the cell case 44 of the battery cells 43. In other words, the discharge valve 48 of each of the bottom plates 45 does not contact the first thermal conduction portion 61 or the second thermal conduction portion 62. When the thermal conduction material 60 are solidified, the battery modules 40 are fixed to the regions 26A, 26B by the first thermal conduction portion 61 and the second thermal conduction portion 62. Furthermore, the battery modules 40 are also fixed to the regions 26A, 26B by plural brackets 57 (omitted in Fig. 16).

### Operation and Advantageous Effects

Next, description follows regarding the operation and advantageous effects of the fourth exemplary embodiment.

In the fourth exemplary embodiment too, the internal pressure of the cell case 44 rises when an internal short occurs in one of the battery cells 43 of one of the battery modules 40, and sometimes the bottom plate 45 and the upper plate 46U deform so as to be indented toward the internal space side of the cell case 44. However, the rough surfaces 76 where the first thermal conduction portion 61 and the second thermal conduction portion 62 are adhered are formed to the left and right side portions 44F1 of the cladding film 44F covering the bottom plate 45. This means that the adhesive strength between the first thermal conduction portion 61 and the left side portion 44F 1 (the rough surface 76), and the adhesive strength between the second thermal conduction portion 62 and the right side portion 44F 1 (the rough surface 76), is greater than cases in which the entire lower face of the bottom plate 45 (the cladding film 44F) is a flat face (smooth face). This means that in such cases the first thermal conduction portion 61 contacting the left side portion 44F1 (the rough surface 76) of the cell case 44 of the battery cell 43 bends so as to become upwardly convex following the deformation of the bottom plate 45, and the second thermal conduction portion 62 contacting the right side portion 44F1 (the rough surface 76) of the cell case 44 of the battery cell 43 bends so as to become upwardly convex following the deformation of the bottom plate 45. This means that the regions 26A, 26B of the lower case 24 adhered to the first thermal conduction portion 61 and the second thermal conduction portion 62 also bend so as to be upwardly convex. Due to the regions 26A, 26B also deforming so as to comply to the deformation of the side portions 44F1, the thermal conduction material 60 is not liable to detach from the left side portion and the right side portion (the cladding film 44F) of the bottom plate 45 or from the bottom plate 26 of the lower case 24 even if the bottom plate 45 of the cell case 44 of the battery cell 43 deforms toward the internal space side of the cell case 44. The battery pack 75 of the fourth exemplary embodiment is accordingly able to suppress a drop in the battery cell 43 cooling function provided by the thermal conduction material 60 provided between the bottom plate 45 of the battery cell 43 (the cladding film 44F) and the bottom plate 26 of the lower case 24, even in cases in which the bottom plate 45 of the cell case 44 has deformed toward the internal space side of the cell case 44.

Furthermore, in the fourth exemplary embodiment too, the discharge valve 48 performs valve-opening smoothly when the internal pressure of the cell case 44 of the battery cell 43 has attained the specific value, and the matter (debris) housed inside the cell case 44 is discharged smoothly to outside of the battery cell 43 through the discharge valve 48.

This means that in the battery pack 75 of the fourth exemplary embodiment too, the battery cell 43 cooling function provided by the thermal conduction material 60 can be suppressed from dropping even in cases in which the bottom plate 45 of the cell case 44 has deformed toward the internal space side of the cell case 44, while still being a structure in which the discharge valve 48 performs valve-opening smoothly when the internal pressure of the cell case 44 of the battery cell 43 has attained the specific value.

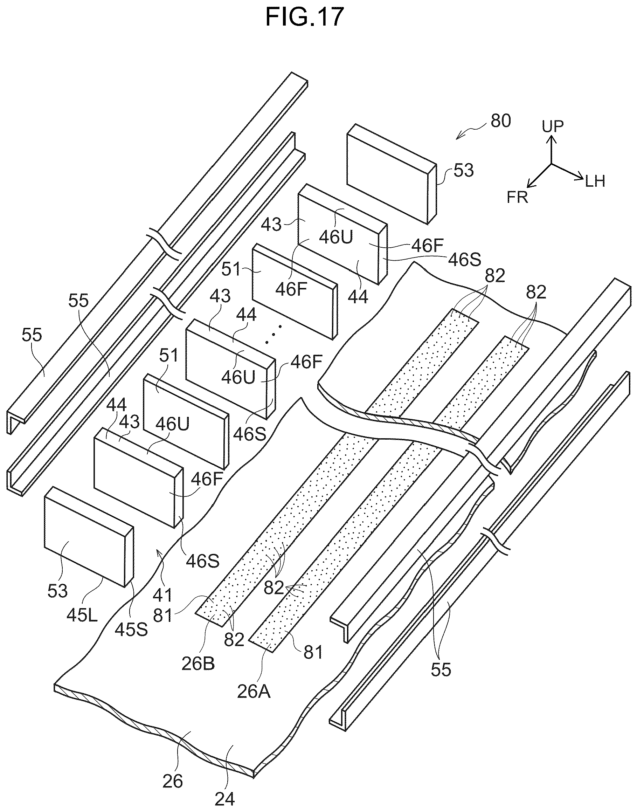

Description follows regarding a fifth exemplary embodiment of the present disclosure, with reference to Fig. 17. Note that the same reference numerals are appended to members the same as those of the first exemplary embodiment, and detailed explanation thereof will be omitted.

A battery pack 80 of the fifth exemplary embodiment differs from the above exemplary embodiments in that the ribs 49, 67 and the rough surfaces 76 are not provided to the bottom plate 45 of the battery cells 43, and instead rough surfaces (uneven surface portion) 81 are provided to the bottom plate 26 of the lower case 24.

As illustrated in Fig. 17, rough surfaces 81 are formed to the entire region 26A and to the entire region 26B of the bottom plate 26 of the lower case 24. Namely, multiple indentations and protrusions 82 are formed to the region 26A and the region 26B. The rough surfaces 81 are configured by these multiple indentations and protrusions 82.

Furthermore, although omitted from illustration, the first thermal conduction portion 61 is coated over the entire region 26A, and the second thermal conduction portion 62 is coated over the entire region 26B. Furthermore, the first thermal conduction portion 61 contacts a left side portion of the bottom plate 45 of the cell case 44 of the battery cells 43, and the second thermal conduction portion 62 contacts a right side portion of the bottom plate 45 of the cell case 44 of the battery cells 43. In other words, the discharge valve 48 of each of the bottom plates 45 does not contact the first thermal conduction portion 61 or the second thermal conduction portion 62. When the thermal conduction material 60 are solidified, the battery modules 40 are fixed to the regions 26A, 26B (the rough surfaces 81) by the first thermal conduction portion 61 and the second thermal conduction portion 62. Furthermore, the battery modules 40 are fixed to the regions 26A, 26B by plural brackets 57 (omitted from illustration in Fig. 17).

### Operation and Advantageous Effects

Next, the operation and advantageous effects of the fifth exemplary embodiment will be described.

In the fifth exemplary embodiment too, the internal pressure of the cell case 44 rises when an internal short occurs in one of the battery cells 43 of one of the battery modules 40, and sometimes the bottom plate 45 and the upper plate 46U deform so as to be indented toward the internal space side of the cell case 44. This means that the first thermal conduction portion 61 that contacts the left side portion of the bottom plate 45 of the cell case 44 of the battery cells 43 bends so as to become upwardly convex following the deformation of the bottom plate 45, and the second thermal conduction portion 62 that contacts the right side portion of the bottom plate 45 of the cell case 44 of the battery cells 43 bends so as to become upwardly convex following the deformation of the bottom plate 45. This means that in such cases, the first thermal conduction portion 61 that contacts the left side portion of the bottom plate 45 of the cell case 44 of the battery cells 43 bends so as to become upwardly convex following the deformation of the bottom plate 45, and the second thermal conduction portion 62 that contacts the right side portion of the bottom plate 45 of the cell case 44 of the battery cells 43 bends so as to become upwardly convex following the deformation of the bottom plate 45. Furthermore, the region 26A and the region 26B are configured by the rough surfaces 81. This means that the adhesive strength between the region 26A (the rough surface 81) and the first thermal conduction portion 61, and the adhesive strength between the region 26B (the rough surface 81) and the second thermal conduction portion 62, are greater than cases in which the entire upper face of the bottom plate 26 is a flat face (smooth plane). The regions 26A, 26B of the lower case 24 adhered to the first thermal conduction portion 61 and to the second thermal conduction portion 62 also bend so as to be upwardly convex. The thermal conduction material 60 is accordingly less liable to detach from the regions 26A, 26B compared to when the regions 26A, 26B do not bend so as to be upwardly convex. The thermal conduction material 60 is accordingly not liable to detach from the left side portion and the right side portion of the bottom plate 45 or from the regions 26A, 26B of the bottom plate 26, even when the bottom plate 45 of the cell case 44 of the battery cells 43 deforms toward the internal space side of the cell case 44. The battery pack 80 of the fifth exemplary embodiment is accordingly able to suppress a drop in the battery cell 43 cooling function provided by the thermal conduction material 60 provided between the bottom plate 45 of the battery cell 43 and the bottom plate 26 of the lower case 24 even in cases in which the bottom plate 45 of the cell case 44 has deformed toward the internal space side of the cell case 44.

Furthermore, in the fifth exemplary embodiment too, the discharge valve 48 performs valve-opening smoothly when the internal pressure of the cell case 44 of the battery cell 43 has attained the specific value, and the matter (debris) housed inside the cell case 44 is discharged smoothly to outside of the battery cell 43 through the discharge valve 48.

This means that the battery pack 80 of the fifth exemplary embodiment is also able to suppress a drop in the battery cell 43 cooling function provided by the thermal conduction material 60 even in cases in which the bottom plate 45 of the cell case 44 has deformed toward the internal space side of the cell case 44, while still being a structure in which the discharge valve 48 performs valve-opening smoothly when the internal pressure of the cell case 44 of the battery cell 43 has attained the specific value.

Although battery packs according to the exemplary embodiments have been described above, appropriate design modifications may be made within a range not departing from the spirit of the present disclosure.

For example, the ribs 71 or the rough surfaces 81 may be formed to the bottom plate 26 of the first exemplary embodiment and the second exemplary embodiment.

The ribs 49, 67 or the rough surfaces 76 may be formed to the bottom plate 45 of the battery cell 43 of the third exemplary embodiment.

The battery pack may be equipped with three or more battery modules.

Any number of battery cells may be contained in a battery module.

With the thermal conduction material 60 being coated onto locations of the bottom plate 45 of the cell case 44 avoiding the discharge valve 48, but not onto the bottom plate 26, the battery stack 41 may be fixed to an upper face of the bottom plate 26 in this state. In such cases, the thermal conduction material 60 is preferably coated onto the ribs 49 in the first exemplary embodiment, and is preferably coated onto the rough surfaces 76 in the fourth exemplary embodiment. The thermal conduction material 60 may be coated onto both the locations of the bottom plate 45 of the cell case 44 avoiding the discharge valve 48, and onto the upper face of the bottom plate 26.

The stacking direction of the battery cells (extension direction of the battery modules) in the battery pack may be a direction different to the front-rear direction. Moreover, the direction that the battery modules are arranged alongside each other may be a direction different to the left-right direction.

The vehicle may be a battery electric vehicle including an electric motor utilizing power from a battery pack different to an electric car. For example, the vehicle may be a hybrid electric vehicle (HEV) or a plug-in hybrid electric vehicle (PHEV).

## Claims

1. A power storage device, comprising:
at least one battery cell equipped with a cell case;
a discharge valve that is provided at a first bottom section, which is a bottom section of the battery cell, and that performs valve-opening when an internal pressure of the cell case has attained a specific value;
a battery case that houses the battery cell;
an uneven surface portion that is formed at at least one of the first bottom section or a second bottom section, which is a bottom section of the battery case, and that is disposed at a different position from the discharge valve when viewed in a vertical direction; and
a deformable thermal conduction material that is adhered to the first bottom section and the second bottom section so as to contact the uneven surface portion while avoiding the discharge valve.

2. The power storage device of claim 1, wherein the uneven surface portion is configured by a plurality of ribs.

3. The power storage device of claim 2, wherein the ribs are provided at the first bottom section.

4. The power storage device of claim 3, wherein:
a shape of the first bottom section when the cell case is viewed in the vertical direction is a rectangular shape including a pair of long sides and a pair of short sides; and
the ribs extend along a direction parallel to the long sides.

5. The power storage device of claim 3, wherein:
a shape of the first bottom section when the cell case is viewed in the vertical direction is a rectangular shape including a pair of long sides and a pair of short sides; and
the ribs extend along a direction parallel to the short sides.

6. The power storage device of claim 2, wherein the ribs are provided at the second bottom section of the battery case.

7. The power storage device of claim 6, wherein:
a shape of the first bottom section when the cell case is viewed in the vertical direction is a rectangular shape including a pair of long sides and a pair of short sides; and
the ribs extend along a direction parallel to the long sides.

8. The power storage device of claim 1 or claim 2, wherein the uneven surface portion is a rough surface.
